# EUROPÄISCHE PATENTSCHRIFT

(11) **EP 2 005 034 B1**
(45) Veröffentlichungstag und Bekanntmachung des Hinweises auf die Patenterteilung: **04.09.2013**
(21) Anmeldenummer: 07726344.0
(22) Anmeldetag: 12.02.2007
(51) Int. Cl.: F16H 55/17

(54) **IN UMFANGSRICHTUNG GEZACKTES ODER GEWELLTES ZAHNRAD**
GEAR WHEEL WHICH IS INDENTED OR CORRUGATED IN THE DIRECTION OF THE CIRCUMFERENCE
ROUE DENTÉE CRÉNELÉE OU ONDULÉE DANS LE SENS CIRCONFÉRENTIEL

(30) Priorität: 31.03.2006 DE 102006014997
(43) Veröffentlichungstag der Anmeldung: 24.12.2008
(73) Patentinhaber: Robert Bosch GmbH, 70442 Stuttgart (DE)
(72) Erfinder: TASCH, Franz, 76287 Rheinstetten (DE); HAUSSECKER, Walter, 77830 Buehlertal (DE); THOENE, Holger, 76437 Rastatt (DE); OBERLE, Klaus, 77830 Buehlertal (DE); MILI, Tarek, 76133 Karlsruhe (DE); HERTWECK, Volker, 76532 Baden-Baden (DE); BOHR, Peter, 76137 Karlsruhe (DE); FIEDLER, Max, 77833 Ottersweier-Unzhurst (DE); DEPNER, Dieter, 76547 Sinzheim (DE); KRIEG, Martin, 76571 Gaggenau (DE)
(86) Internationale Anmeldenummer: PCT/EP2007/051322
(87) Internationale Veröffentlichungsnummer: WO 2007/113034

(56) Entgegenhaltungen:
- EP-A2- 0 875 697
- DE-U1- 29 923 513
- JP-A- 9 310 751
- US-A- 3 361 004
- US-A- 3 376 714
- US-A1- 2002 017 153
- US-A1- 2003 029 263

## Beschreibung

### Stand der Technik

Die Erfindung betrifft ein Zahnrad gemäß dem Oberbegriff des Anspruchs 1.

Die EP 0 875 697 A2 zeigt ein gattungsmäßinges Zahnrad mit einem aus zwei Ringwänden bestehenden Zahnkranz mit einer Außenverzahnung sowie mit einer Zahnradnabe mit einem Zahnradnabenkanal mit zwei gegenüberliegenden Öffnungen. Die innere Ringwand des Zahnkranzes ist über drei in Umfangsrichtung beabstandete, radiale Stege mit der Zahnradnabe verbunden. Zusätzlich ist eine sich in Umfangsrichtung sowie in radialer Richtung erstreckende, ebene Verbindungswand vorgesehen, die die Zahnradnabe mit dem Zahnkranz verbindet. Derartige Zahnräder werden bevorzugt als Schneckenrad in Schneckengetrieben, insbesondere für Verstellantriebe in Fahrzeugen eingesetzt. Die in radialer Richtung verlaufenden Stege verursachen Steifigkeitssprünge, die sich negativ auf den Gleichlauf des Zahnrades auswirken. Weiterhin wirken sich auch die durch die radial verlaufenden Stege verursachten Materialanhäufungen negativ auf den Gleichlauf des Zahnrades aus. Ferner wird durch den Schwund der Stege beim Abkühlprozess bei der Spritzgussfertigung die Güte der Rundheit des Zahnradnabenkanals negativ beeinflusst.

Mit der US 2002/017153 A1 ist ein Zahnrad bekannt geworden, das mittels einer Nabe auf einer Welle gelagert ist. Von der Nabe erstreckt sich eine Verbindungswand zu einer äußeren Verzahnung, wobei an der Verbindungswand radiale und umlaufende Stege angeformt sind. Ein radial äußerer Bereich der Verbindungswand weist in Umfangsrichtung eine gewellte oder gezackte Struktur auf.

### Offenbarung der Erfindung

### Technische Aufgabe

Der Erfindung liegt die Aufgabe zugrunde, ein verbessertes Zahnrad mit ausreichender, bevorzugt höherer, Steifigkeit und verbesserten Gleichlaufeigenschaflen bereitzustellen.

### Technische Lösung

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, die Steifigkeit des Zahnrades durch die Formgebung der Verbindungswand positiv zu beeinflussen. Diese ist erfindungsgemäß zumindest in einem ringförmigen Abschnitt nicht eben, sondern in Umfangsrichumg gewellt und/oder gezackt ausgebildet. Durch die wellige und/oder gezackte Ausführung der Verbindungswand entstchen in Umfangsrichtung wechselweise nebeneinander angeordnete Berge und fäler, die zwei in radialer Richtung beabstandete Abschnitte, vorzugsweise den Zahnkranz und die Zahnradnabe in radialer Richtung gegeneinander abstützen. Aufgrund der Erfindung kann auf das Vorschen von in radialer Richtung verlaufenden Stegen verzichtet werden, wodurch Materialanhäufungen vermieden werden und sich ein verbesserter Gleichtauf ergibt. Weiterhin werden die Steifigkeitssprünge des Zahnrades reduziert und es resultiert eine verbesserte Güte der Rundheit des Zahnradnabenkanals. Bevorzugt ist die Dicke der Verbindungswand über ihre Umfangserstreckung konstant. Durch die Erfindung wird eine gleichmäßige Abstützung der in radialer Richtung zueinander beabstandeten Abschnitte des Zahnrades gewährleistet.

Um optimale Gleichlaufeigenschaften zu erzielen ist in Ausgestaltung der Erfindung vorgesehen, dass die Berge und die Täler der Verbindungswand gleichmäßig über den Umfang verteilt angeordnet sind. Bevorzugt sind mindestens drei zucinander in Umfangsrichtung versetzte Berge und somit ebenfalls drei in Umfangsrichtung zueinander versetzte Täler vorgesehen. Dabei schließen die Scheitelpunkilinien zweier benachbarter Berge bzw. Täler einen Umfangswinkel von 120° ein.

Bevorzugt verlaufen die Scheitelpunktlinien der Berge und/oder der Täler in jeweils einer Ebene, die von einem Radius des Zahnrades und der Drehachse aufgespannt ist. Es kann von Vorteil sein, wenn die Scheitelpunktlinien jeweils parallel zu einem Radius des Zahnrades verlaufen.

Anstelle von lediglich einer Verbindungswand können mehrere in radialer Richtung beabstandete ringförmige Verbindungswände vorgesehen sein, wobei bevorzugt die radial innere Verbindungswand an die Zahnradnabe und die radial äußere Verbindungswand an den Zahnkranz oder eine radial innere Ringwand des Zahnkranzes angeformt ist. 1 lierdurch können die Gleichlaufeigenschaften weiter verbessert werden, insbesondere dann, wenn die Scheitelpunktlinien der Berge bzw. der Täler der ersten Verbindungswand zu den Scheitelpunktlinien der Berge bzw. Täler der zweiten Verbindungswand in Umfangsrichtung versetzt angeordnet sind. Bevorzugt liegen die Scheitelpunktlinien der Berge einer Verbindungswand auf denselben Umfangswinkeln wie die Scheitelpunktlnien der Täler der zweiten Verbindungswand.

Um die Steifigkeit des Zahnrades weiter zu erhöhen, ist bevorzugt zwischen mindestens zwei in radialer Richtung benachbarten Verbindungswänden eine Zwischenringwand vorgeschen, an die die radial innere Verbindungswand mit ihrem radial äußeren Randbereich und die radial äußere Verbindungswand mit ihrem radial inneren Randbereich angeformt ist. Die Erstreckung der Zwiseheunngwand in axialer Richtung entspricht bevorzugt mindestens dem axialen Abstand einer Scheitellinie eines an die Zwischenringwand angeformten Berges zu der Scheitellinie eines an die Zwischenringwand angeformten Tales.

Erindungsgemäß ist zusätzlich zu dem äußerem Zahnkranz mit seiner Außen- und/oder Innenverzahnung ein radial innerer Zahnkranz vorgesehen ist, der bevorzugt in axialer Richtung den äußeren Zahnkranz Überragt.

### Kurze Beschreibung der Zeichnungen

### Weitere Vorteile und zweckmäßige

### Ausführungen sind den weiteren

Ansprüchen, der Figurenbeschreibung und den Zeichnungen zu entnehmen. Es zeigen:
Fig. 2 eine perspektivische Ansicht eines Zahnrades mit einer wellenförmigen Verbindungswand und einem in axialer Richtung angeformten Mitnehmerzahnkranz,
Fig. 3 eine Schnittdarstellung des Zahnrades gemäß Fig. 2 entlang der Schnittlinic A-A,
Fig. 4 ein Zahnrad, bei dem die Verbindungswand gezackt ausgebildet ist
   als erfindungsgemäße Ausführungsbeispiele, und

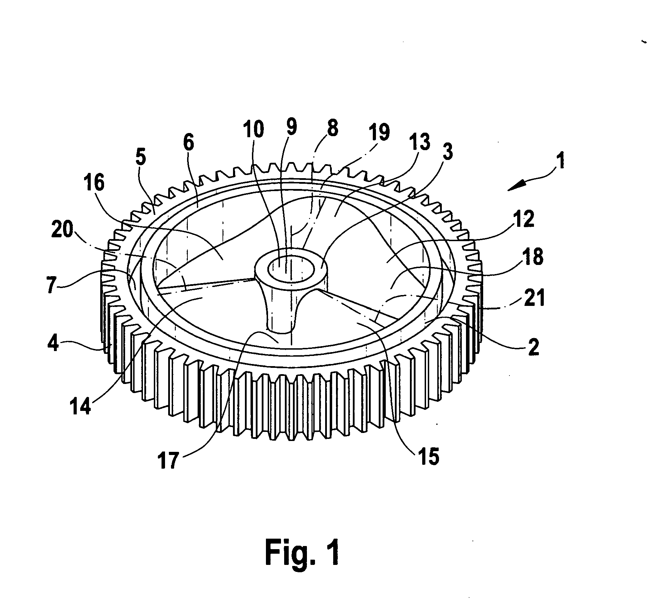

Fig. 1 eine perspektivische Ansicht eines Zahnrades mit einer wellenförmigen Verhindungswand mit drei Wellenbergen und drei Wellentälern,

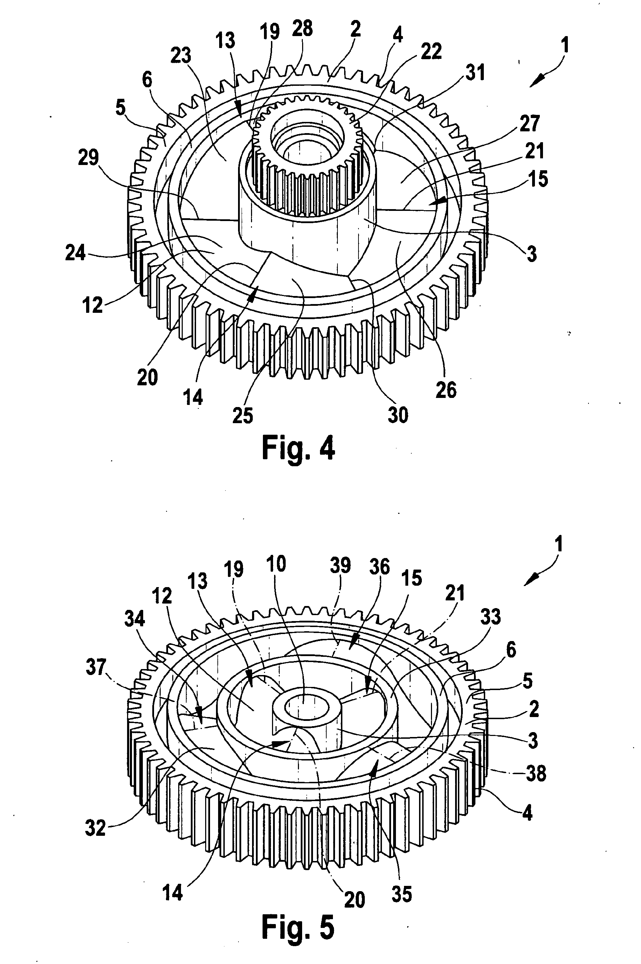

Fig. 5 ein Zahnrad mit zwei in radialer Richtung beabstandeten, ringförmigen Verbindungswänden, die an eine gemeinsame Zwischenringwand angeformt sind, beide als technnlogischer Hintergrund der Erfindung, zeiger nicht die Erfindung.

### Ausführungsformen der Erfindung

In den Figuren sind gleiche Bauteile und Bauteile mit gleicher Funktion mit den gleichen Bezugszeichen gekennzeichnet.

In Fig. 1 ist ein Zahnrad 1 mit einem radial äußeren Zahnkranz 2 und einer radial inneren Zahnradnabe 3 gezeigt. Der Zahnkranz 2 ist mit einer Außenverzahnung 4 versehen und besteht aus zwei in radialer Richtung zueinander beabstandeten, konzentrisch zueinander angeordneten Ringwänden 5, 6, die über einen umfänglich geschlossenen Radialsteg 7 gegeneinander abgestützt sind.

Die Zahnradnabe 3 ist mit einem innen liegenden, konzentrisch zu der Drehachse 8 des Zahnrades 1 ausgebildeten Zahnradnabenkanal 9 mit kreisförmigem Querschnitt versehen. Dieser weist zwei gegenüberliegende Öffnungen 10, 11 auf, von denen in Fig. 1 nur die Öffnung 10 gezeigt ist. Der Zahnradnabenkanal 9 dient zur Aufnahme einer nicht gezeigten Welle.

Die innere Ringwand 6 des Zahnrades 1 ist mittels einer umfänglich geschlossenen Verbindungswand 12 an der Zahnradnabe 3 abgestützt. Die Verbindungswand 12 ist wellig mit drei in Umfangsrichtung beabstandeten Wellenbergen 13, 14, 15 sowie mit drei jeweils zwischen zwei benachbarten Wellenbergen 13, 14; 14, 15; 15, 13 angeordneten Wellentälern 16, 17, 18 ausgebildet. Jeder Wellenberg 13, 14, 15 und jedes Wellental 16, 17, 18 weist eine in radialer Richtung verlaufende Scheitelpunktlinie auf, wobei aus Übersichtlichkeitgründen nur die Scheitelpunktlinien 19, 20, 21 der Wellenberge 13, 14, 15 eingezeichnet sind. Diese sind um 120° zueinander in Umfangsrichtung versetzt angeordnet und verlaufen parallel zum Radius des Zahnrades 1.

Es ist denkbar, die Scheitelpunktlinien 19, 20, 21 derart anzuordnen, dass sie in axialer Richtung einen Winkel mit dem jeweiligen Radius des Zahnrades 1 einschließen, insbesondere derart, dass sie zwar in von den Radien und der Drehachse 8 aufgespannten Ebenen verlaufen, die Höhe der Wellenberge und/oder die Tiefe der Wellentäler jedoch in radialer Richtung zu- oder abnimmt. Anders ausgedrückt schließen die Scheitelpunktlinien in diesem Fall mit der Drehachse 8 des Zahnrades 1 einen von 90° abweichenden Winkel ein.

Die in Fig. 1 nicht eingezeichneten Scheitelpunktlinien der Wellentäler 16, 17, 18 sind ebenfalls jeweils um 120° in Umfangsrichtung versetzt zueinander angeordnet und schließen mit den Scheitelpunktlinien 19, 20, 21 der benachbarten Wellenberge jeweils einen Umfangswinkel von 60° ein.

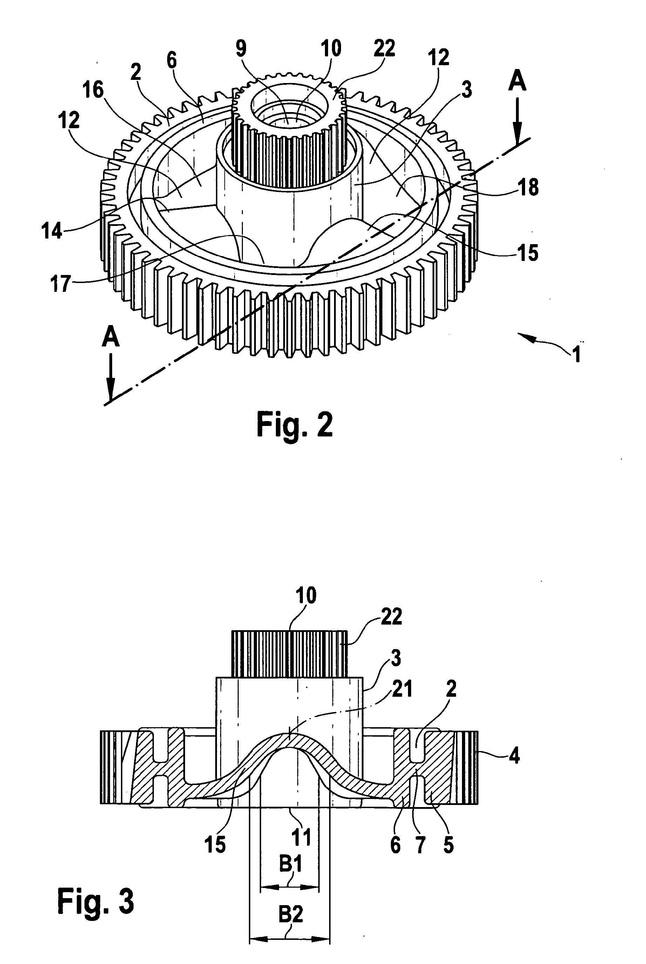

Das in Fig. 2 gezeigte Zahnrad 1 weist zusätzlich zu dem radial äußeren Zahnkranz 2 einen radial inneren Zahnkranz 22 mit einer Außenverzahnung auf. Der radial innere Zahnkranz erstreckt sich in axialer Richtung über den äußeren Zahnkranz 2 hinaus. Um ausreichend Raum für den Zahnkranz 22 in radialer Richtung zur Verfügung zu stellen ist die Zahnradnabe 3 des Zahnrades 1 gemäß Fig. 2 mit einem größeren Außendurchmesser ausgebildet als die Zahnradnabe 3 des Zahnrades 1 gemäß Fig. 1. Die Zahnradnabe 3 bzw. der Zahnradnabenkanal 9 des Zahnrades 1 gemäß Fig. 2 dient zur Aufnahme eines Lagerbolzens.

Auch bei dem in Fig. 2 gezeigten Zahnrad 1 ist die innere Ringwand 6 des äußeren Zahnkranzes 2 in radialer Richtung über eine Verbindungswand 12 mit der Zahnradnabe 3 verbunden. Auch hier sind drei in Umfangsrichtung beabstandete Wellenberge 13, 14, 15 sowie dazwischen liegende, sich ebenfalls in radialer Richtung erstreckende Wellentäler 16, 17, 18 angeordnet. Wie bei dem Ausführungsbeispiel gemäß Fig. 1 verbreitern sich die Wellenberge 13, 14, 15 sowie die Wellentäler 16, 17, 18 in radialer Richtung nach außen.

In Fig. 3 ist eine geschnittene Ansicht des Zahnrades 1 gemäß Fig. 2 entlang der Schnittlinien A-A gemäß Fig. 2 dargestellt. Eingezeichnet ist die senkrecht zur Zeichnungsebene sowie senkrecht zur Drehachse 8 verlaufende Scheitelpunktlinie 21 des Wellenbergs 15. Wie sich aus Fig. 3 ergibt, ist der Wellenberg 15 radial innen in Umfangsrichtung weniger breit (B1) als radial weiter außen (B2).

Das in Fig. 4 gezeigte Zahnrad 1 entspricht im Wesentlichen dem in den Fig. 2 und 3 dargestellten Zahnrad 1. Der einzige Unterschied besteht darin, dass die Verbindungswand 12 nicht gewellt, sondern gezackt ausgebildet ist. Die Scheitelpunktlinien 19, 20, 21 der Wellenberge 13, 14, 15 sind über schräg angeordnete, ebene Wandabschnitte 23, 24, 25, 26, 27, 28 mit den benachbarten Scheitelpunktlinien 29, 30, 31 in Umfangsrichtung verbunden. Zwei benachbarte Verbindungswandabschnitte laufen in einer Scheitelpunktlinie unter einem Winkel zusammen.

Das in Fig. 5 gezeigte Zahnrad 1 weist zwei in radialer Richtung beabstandete, ringförmige Verbindungswände 12, 32 auf. Die radial innere Verbindungswand ist radial innen an der Zahnradnabe 3 und radial außen an einer konzentrisch zur Zahnradnabe 3 angeordneten Zwischenringwand 33 angeformt. Die radial äußere Verbindungswand 32 wiederum ist radial innen an der Zwischenringwand 33 und radial außen an der radial inneren Ringwand 6 des Zahnkranzes 2 angeformt. Beide Verbindungswände 12, 32 sind in Umfangsrichtung gewellt mit je drei Wellenbergen 13, 14, 15; 34, 35, 36 sowie je drei Wellentälern, die aus Übersichtlichkeitsgründen in Fig. 5 nicht mit Bezugszeichen gekennzeichnet sind, ausgebildet.

Die Scheitelpunktlinien 19, 20, 21 der Wellenberge 13, 14, 15 der radial inneren Verbindungswand 12 sind in Umfangsrichtung um jeweils 60° zu den benachbarten Scheitelpunktlinien 37, 38, 39 der Wellenberge 34, 35, 36 der radial äußeren Verbindungswand 32 versetzt angeordnet. Entsprechendes gilt für die nicht eingezeichneten Scheitelpunktlinien der in Umfangsrichtung beabstandeten Wellentäler der radial inneren Verbindungswand 12 und der radial äußeren Verbindungswand 32. In dem gezeigten Ausführungsbeispiel liegen die Scheitelpunktlinien 19, 20, 21 der Wellenberge 13, 14, 15 der radial inneren Verbindungswand 12 auf denselben Umfangswinkeln wie die nicht eingezeichneten Scheitelpunktlinien der Wellentäler der radial äußeren Verbindungswand 32. Entsprechendes gilt für die Scheitelpunktlinien 37, 38, 39 der Wellenberge 34, 35, 36 der radial äußeren Verbindungswand 32 und den Scheitelpunktlinien der Wellentäler der radial inneren Verbindungswand 12.

Es ist denkbar, zusätzlich zu den beiden Verbindungswänden 12, 32 weitere ringförmige Verbindungswände vorzusehen.

## Patentansprüche

1. Zahnrad (1) mit mindestens einem ersten Zahnkranz (2) und einer Zahnradnabe (3) mit einem axialen, konzentrisch zu der Drehachse (8) des Zahnrads (1) angeordneten Zahnradnabenkanal (9) mit mindestens einer Öffnung (10, 11), und mit mindestens einer ersten sich in Umfangsrichtung sowie in radialer Richtung erstreckenden ringförmigen Verbindungswand (12, 32), die zwei in radialer Richtung beabstandete Abschnitte des Zahnrads (1) miteinander verbindet, wobei die Verbindungswand (12, 32) gewellt und/oder gezackt mit in Umfangsrichtung nebeneinander angeordneten Bergen (13, 14, 15; 34, 35, 36) und Tälern (16, 17, 18) ausgebildet ist und die Zahnradnabe (3) radial mit dem ersten Zahnkranz (2) verbindet, **dadurch gekennzeichnet, dass** konzentrisch zu der Drehachse (8) des Zahnrads (1) ein zweiter Zahnkranz (22) angeordnet ist, wobei der erste Zahnkranz (2) als radial äußerer Zahnkranz (2) und der zweite Zahnkranz (22) als radial innerer Zahnkranz 22 mit einer Außenverzahnung ausgebildet ist, und der Außendurchmesser der Zahnradnabe (3) größer ist als die Außenverzahnung des radial inneren Zahnkranzes (22),

2. Zahnrad nach Anspruch 1,
**dadurch gekennzeichnet,**
**dass** die Berge (13,14, 15; 34, 35, 36) und die Täler (16, 17, 18) gleichmäßig über den Umfang verteilt angeordnet sind.

3. Zahnrad nach einem der vorhergehenden Ansprüche,
**dadurch gekennzeichnet,**
**dass** die Scheitelpunktlinien (19, 20, 21,29, 30, 31, 37, 28, 39) der Berge (13, 14, 15; 34, 35, 36) und/oder der Täler (16, 17, 18) in von den Radien des Zahnrades (1) und der Drehachse (8) aufgespannten Ebenen, vorzugsweise parallel zu den Radieu, verlaufen.

4. Zahnrad nach einem der vorhergehenden Ansprüche,
**dadurch gekennzeichnet,**
**dass** zusätzlich zu der ersten Verbindungswand (12) mindestens eine weitere, in radialer Richtung beabstandete, konzentrische zu der ersten Verbindungswand (12) angeordnete zweite Verbindungswand (32) vorgesehen ist.

5. Zahnrad nach Anspruch 4,
**dadurch gekennzeichnet,**
**dass** die beiden Verbindungswände (12. 32) an eine gemeinsame Zwischenringwand (33) angeformt sind.

6. Zahnrad (1) nach einem der Ansprüche 4 oder 5,
**dadurch gekennzeichnet,**
**dass** die Scheitelpunktlinien (19, 20, 21) der Berge (13, 14, 15) der ersten Verbindungswand (12) zu den Scheitelpunktlinien (37, 38, 39) der Berge (34, 35, 36) der zweiten, vorzugsweise radial unmittelbar benachbarten, Verbindungswand (32) in Umfangsrichtung versetzt angeordnet sind.

7. Zahnrad (1) nach Anspruch 6,
**dadurch gekennzeichnet,**
**dass** die Scheitelpunkthnien (19, 20, 21) der Berge (13, 14, 15) der ersten Verbindungswand (12) auf den selben Umfangswinkeln angeordnet sind, wie die Scheitelpunktlinien (37, 38, 39) der Täler der zweiten, vorzugsweise radial unmittelbar benachbarten, Verbindungswand (32).

8. Zahnrad (1) nach einem der vorhergehenden Ansprüche,
**dadurch gekennzeichnet, dass** sich der radial innere Zahnkranz (22) in axialer Richtung über den äußeren Zahnkranz (2) hinaus erstreckt.

## Claims

1. Gearwheel (1) having at least one first toothed rim (2) and a gearwheel hub (3) with an axial gearwheel-hub channel (9) which is arranged concentrically with respect to the rotational axis (8) of the gearwheel (1) and has at least one opening (10, 11), and having at least one first annular connecting wall (12, 32) which extends in the circumferential direction and in the radial direction and connects two sections of the gearwheel (1) to one another which are spaced apart in the radial direction, the connecting wall (12, 32) being of undulating and/or serrated configuration with troughs (16, 17, 18) and peaks (13, 14, 15; 34, 35, 36) which are arranged next to one another in the circumferential direction and connecting the gearwheel hub (3) radially to the first toothed rim (2), **characterized in that** a second toothed rim (22) is arranged concentrically with respect to the rotational axis (8) of the gearwheel (1), the first toothed rim (2) being configured as a radially outer toothed rim (2) and the second toothed rim (22) being configured as a radially inner toothed rim (22) with an external toothing system, and the external diameter of the gearwheel hub (3) being greater than the external toothing system of the radially inner toothed rim (22).

2. Gearwheel according to Claim 1, **characterized in that** the peaks (13, 14, 15; 34, 35, 36) and the troughs (16, 17, 18) are arranged uniformly distributed over the circumference.

3. Gearwheel according to one of the preceding claims, **characterized in that** the vertex lines (19, 20, 21, 29, 30, 31, 37, 38, 39) of the peaks (13, 14, 15; 34, 35, 36) and/or the troughs (16, 17, 18) run in planes which are defined by the radii of the gearwheel (1) and the rotational axis (8), preferably run parallel to the radii.

4. Gearwheel according to one of the preceding claims, **characterized in that**, in addition to the first connecting wall (12), at least one further second connecting wall (32) is provided which is spaced apart in the radial direction and is arranged concentrically with respect to the first connecting wall (12).

5. Gearwheel according to Claim 4, **characterized in that** the two connecting walls (12, 32) are formed integrally onto an intermediate annular wall (33).

6. Gearwheel (1) according to either of Claims 4 and 5, **characterized in that** the vertex lines (19, 20, 21) of the peaks (13, 14, 15) of the first connecting wall (12) are arranged offset in the circumferential direction with respect to the vertex lines (37, 38, 39) of the peaks (34, 35, 36) of the second, preferably radially immediately adjacent connecting wall (32).

7. Gearwheel (1) according to Claim 6, **characterized in that** the vertex lines (19, 20, 21) of the peaks (13, 14, 15) of the first connecting wall (12) are arranged on the same circumferential angles as the vertex lines (37, 38, 39) of the troughs of the second, preferably radially immediately adjacent connecting wall (32).

8. Gearwheel (1) according to one of the preceding claims, **characterized in that** the radially inner toothed rim (22) extends in the axial direction beyond the outer toothed rim (2).

## Revendications

1. Roue dentée (1) comprenant au moins une première couronne dentée (2) et un moyeu de roue dentée (3) avec un canal de moyeu de roue dentée (9) axial disposé concentriquement par rapport à l'axe de rotation (8) de la roue dentée (1) avec au moins une ouverture (10, 11), et avec au moins une première paroi de connexion (12, 32) de forme annulaire s'étendant dans la direction périphérique et dans la direction radiale, laquelle relie l'une à l'autre deux portions espacées dans la direction radiale de la roue dentée (1), la paroi de connexion (12, 32) étant réalisée sous forme ondulée et/ou crénelée avec des sommets (13, 14, 15 ; 34, 35, 36) et des vallées (16, 17, 18) disposés les uns à côté des autres dans la direction périphérique, et reliant le moyeu de roue dentée (3) radialement à la première couronne dentée (2), **caractérisée en ce qu'**une deuxième couronne dentée (22) est disposée concentriquement à l'axe de rotation (8) de la roue dentée (1), la première couronne dentée (2) étant réalisée sous forme de couronne dentée radialement extérieure (2) et la deuxième couronne dentée (22) étant réalisée sous forme de couronne dentée radialement intérieure (22) avec une denture extérieure, et le diamètre extérieur du moyeu de roue dentée (3) étant supérieur à la denture extérieure de la couronne dentée radialement intérieure (22).

2. Roue dentée selon la revendication 1,
**caractérisée en ce que**
les sommets (13, 14, 15 ; 34, 35, 36) et les vallées (16, 17, 18) sont disposés de manière répartie uniformément sur la périphérie.

3. Roue dentée selon l'une quelconque des revendications précédentes,
**caractérisée en ce que**
les lignes de crête (19, 20, 21, 29, 30, 31, 37, 38, 39) des sommets (13, 14, 15 ; 34, 35, 36) et/ou des vallées (16, 17, 18) s'étendent dans des plans tendus par les rayons de la roue dentée (1) et de l'axe de rotation (8), de préférence parallèlement aux rayons.

4. Roue dentée selon l'une quelconque des revendications précédentes,
**caractérisée en ce**
**qu'**en plus de la première paroi de connexion (12), au moins une autre deuxième paroi de connexion (32) est prévue, laquelle est disposée concentriquement à la première paroi de connexion (12) et à distance radiale de celle-ci.

5. Roue dentée selon la revendication 4,
**caractérisée en ce que**
les deux parois de connexion (12, 32) sont façonnées sur une paroi annulaire intermédiaire commune (33).

6. Roue dentée (1) selon l'une quelconque des revendications 4 ou 5,
**caractérisée en ce que**
les lignes de crête (19, 20, 21) des sommets (13, 14, 15) de la première paroi de connexion (12) sont décalées dans la direction périphérique par rapport aux lignes de crête (37, 38, 39) des sommets (34, 35, 36) de la deuxième paroi de connexion (32) de préférence directement adjacente radialement.

7. Roue dentée (1) selon la revendication 6,
**caractérisée en ce que**
les lignes de crête (19, 20, 21) des sommets (13, 14, 15) de la première paroi de connexion (12) sont disposées sur les mêmes angles périphériques que les lignes de crête (37, 38, 39) des vallées de la deuxième paroi de connexion (32), de préférence directement adjacente radialement.

8. Roue dentée (1) selon l'une quelconque des revendications précédentes,
**caractérisée en ce que** la couronne dentée radialement intérieure (22) s'étend au-delà de la couronne dentée extérieure (2) dans la direction axiale.
